# EUROPÄISCHE PATENTSCHRIFT

(11) **EP 0 728 979 B1**
(45) Veröffentlichungstag und Bekanntmachung des Hinweises auf die Patenterteilung: **31.05.2000**
(21) Anmeldenummer: 96100451.2
(22) Anmeldetag: 13.01.1996
(51) Int. Cl.: F16L 33/207

(54) **Abdichtende Verbindung eines Kunststoffrohres mit einem aus Metall gefertigten Anschlussstück**
Sealing connection between a plastic pipe and a connecting piece made of metal
Raccord étanche entre un tuyau en matière plastique et une pièce de raccordement fabriquée en métal

(30) Priorität: 23.02.1995 DE 29503019 U
(43) Veröffentlichungstag der Anmeldung: 28.08.1996
(73) Patentinhaber: Franz Viegener II GmbH & Co. KG., 57439 Attendorn (DE)
(72) Erfinder: Viegener, Walter, D-57439 Attendorn (DE)
(74) Vertreter: Stracke, Alexander, Dipl.-Ing.

(56) Entgegenhaltungen:
- EP-A- 0 073 048
- DE-B- 1 425 426
- FR-A- 1 079 136
- US-A- 4 498 691

## Beschreibung

Die Erfindung bezieht sich auf eine abdichtende Verbindung eines Kunststoffrohres mit einem aus Metall gefertigten Anschlußstück, wobei das im Verbindungsbereich liegende Ende des Kunststoffrohres mittels einer Preßhülse auf einen zylindrischen Abschnitt des Anschlußstückes aufgepreßt ist und die Preßhülse mittels eines Halteringes in axialer Richtung am Anschlußstück unverlierbar festgelegt ist.

Es ist eine Verbindung dieser Art bekannt (EP-A-0 073 048), bei der die Preßhülse einen ringförmigen Ansatz aufweist, der in eine Umfangsrille des Anschlußstückes eingreift und die Preßhülse am Anschlußstück unverlierbar festlegt. Der ringförmige Ansatz und die Preßhülse sind einstückig und somit aus dem gleichen Werkstoff hergestellt. Die Lage des in die Preßhülse eingeschobenen Endes des Kunststoffrohres kann von außen nicht kontrolliert werden.

Der Erfindung liegt die Aufgabe zugrunde, eine abdichtende Verbindung der eingangs genannten Art so zu gestalten, daß die Lage des Kunststoffrohres auf dem zylindrischen Abschnitt des Anschlußstückes überprüft werden kann und der Haltering als Anlage für das Preßwerkzeug verwendbar ist.

Diese Aufgabe wird erfindungsgemäß dadurch gelöst, daß der Haltering ein separates Bauteil gegenüber der Preßhülse bildet, die Preßhülse an der dem Haltering zugewandten Seite mit einem aufgeweiteten Ringabschnitt versehen ist, der in eine hinterschnittene Nut des Halteringes eingeschnäppt ist und der Haltering mit mindestens einem radial verlaufenden, im Bereich des Endes des Kunststoffrohres vorgesehenen Durchbruch ausgerüstet ist.

Bei der erfindungsgemäßen Verbindung kann die Preßhülse aus Metall und der Haltering aus Kunststoff hergestellt werden.

Der Haltering dient als Anlage für das Preßwerkzeug, so daß der Monteur, der die Verbindung herstellt, kein besonderes Augenmerk auf die lagegerechte Positionierung des Preßwerkzeuges richten muß.
Da der Haltering mit mindestens einem, radial verlaufenden Durchbruch versehen ist, wobei dieser Durchbruch in dem Bereich liegt, in dem das auf das Anschlußstück aufgeschobene Kunststoffrohr endet, ist jederzeit zweifelsfrei erkennbar, ob das Kunststoffrohr weit genug auf den zylindrischen Abschnitt des Anschlußstückes aufgeschoben ist.

Weitere Ausgestaltungen der Erfindung ergeben sich aus den übrigen Unteransprüchen.

Ausführungsbeispiele der Erfindung sind in den beigefügten Zeichnungen dargestellt und werden im folgenden näher beschrieben. Es zeigen:
- Figur 1: einen Schnitt durch ein aus Metall gefertigtes Anschlußstück mit einer vorfixierten Preßhülse und einem mit diesem Anschlußstück zu verbindenden Kunststoffrohr,
- Figur 2: einen der Figur 1 entsprechenden Schnitt nach dem Herstellen der abdichtenden Verbindung,
- Figur 3: einen der Figur 2 entsprechenden Schnitt nach einem weiteren Ausführungsbeispiel der Erfindung.

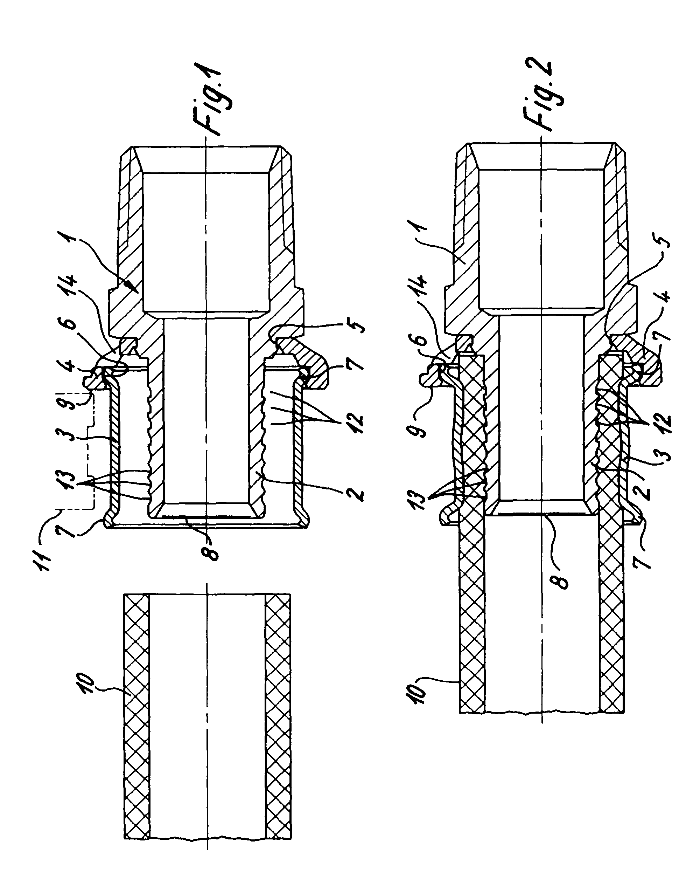

Das in den Figuren 1 und 2 ausgeführte Ausführungsbeispiel der Erfindung zeigt, daß an einem aus Metall hergestellten Anschlußstück 1 mit einem zylindrischen Abschnitt 2 eine wiederum aus Metall gefertigte Preßhülse 3 über einen Haltering 4 in axialer Richtung festgelegt ist. Der Haltering 4 ist aus Kunststoff gefertigt und in eine Rastnut 5 des Anschlußstückes 1 eingeschnäppt.

Weiterhin ist der Haltering 4 selbst mit einer Rastnut 6 versehen, in die ein an einem stirnseitigen Ende der Preßhülse 3 aufgeweiteter Ringabschnitt 7 eingeschnäppt ist.

Die Preßhülse 3 ragt über das im Verbindungsbereich liegende freie Ende 8 des Anschlußstückes 1 hinaus vor und ist in diesem Bereich ebenfalls mit einem aufgeweiteten Ringabschnitt 7 versehen und insoweit symmetrisch gestaltet.

Der Haltering 4 ist mit einem Ringflansch 9 ausgestattet.

Mit dem Bezugszeichen 10 ist ein Kunststoffrohr bezeichnet, welches mit dem Anschlußstück 1 zu verbinden ist. In Figur 1 sind die besagten Teile vor der Montage dargestellt.

Figur 2 zeigt die Situation, die sich nach der Verbindung ergibt. Das Kunststoffrohr 10 wird bis zum Abschlag in den Ringraum zwischen dem zylindrischen Abschnitt 2 des Anschlußstückes 1 und der Preßhülse 3 eingeschoben. Stirnseitig liegt das Kunststoffrohr 10 dabei am Anschlußstück 1 an.

Durch ein in Figur 1 durch strichpunktierte Linien andeutungsweise gezeigtes Preßwerkzeug 11, welches einerseits am Ringflansch 9 des Halteringes 4 und andererseits an dem im freien Endbereich der Preßhülse 3 vorgesehenen Ringabschnitt 7 geführt ist, wird zur Herstellung der Verbindung nun die Preßhülse 3 auf das Kunststoffrohr 10 aufgepreßt, wobei gleichzeitig das Kunststoffrohr 10 mit seinem inneren Durchmesserbereich auf den zylindrischen Bereich 2 des Anschlußstückes 1 aufgepreßt wird. In diesem zylindrischen Bereich 2 sind mehrere, umlaufende Nuten 12 bzw. 13 vorgesehen, wobei die mit dem Bezugszeichen 12 versehenen Nuten sägezahnartig ausgebildet sind und die mit dem Bezugszeichen 13 bezeichneten Nuten eine abgerundete Querschnittsform aufweisen. Über die sägezahnartigen Nuten können beträchtliche Zugkräfte aufgenommen werden, während die abgerundeten Nuten 13 eine einwandfreie Abdichtung zwischen dem Kunststoffrohr 10 und dem Anschlußstück 1 bewirken.

Der aus Kunststoff gefertigte Haltering 4 ist in seinem Umfangsbereich mit mindestens einem radial verlaufenden Durchbruch 14 versehen, der in dem Bereich vorgesehen ist, in dem das Kunststoffrohr 10 am Anschlußteil 1 anliegt. Durch diesen radialen Durchbruch, von dem auch mehrere am Umfang des Halteringes 4 vorgesehen sein können, ist diese exakte Lage des Kunststoffrohres vor Herstellung der Preßverbindung leicht zu kontrollieren.

Bei dem in den Figuren 1 und 2 dargestellten Ausführungsbeispiel ist die Preßhülse 3 unmittelbar am Anschlußstück 1 festgelegt.

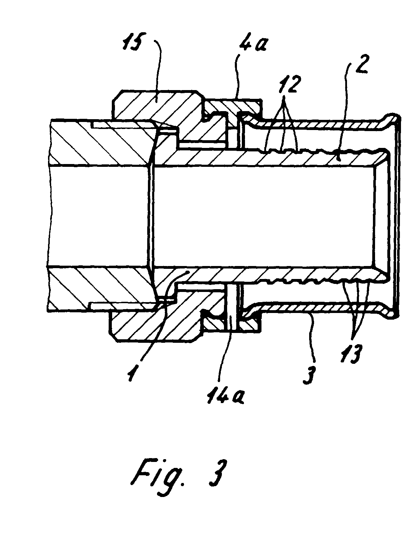

Figur 3 zeigt ein Ausführungsbeispiel der Erfindung, bei dem die Preßhülse 3 an einer Überwurfmutter 15 festgelegt ist, welche das Anschlußstück 1 übergreift. Die Festlegung der Preßhülse 3 an der Überwurfmutter 15 erfolgt wiederum über einen Haltering 4a, der einerseits auf die Überwurfmutter 15 aufgeschnäppt ist und andererseits so konstruiert ist, daß die Preßhülse 3 am Haltering 4a durch eine Schnappverbindung axial fixierbar ist.

Das Festlegen und Verpressen eines Kunststoffrohres erfolgt beim Ausführungsbespiel gemäß Figur 3 in der gleichen Weise wie beim Ausführungsbeispiel nach den Figuren 1 und 2, so daß auf eine erneute Beschreibung diesbezüglich verzichtet werden kann.

Auch beim Ausführungsbeispiel nach Figur 3 ist der zylindrische Abschnitt des Anschlußstückes 1 mit sägezahnartigen sowie mit abgerundeten Nuten 12 und 13 versehen.

Der Haltering 4a weist auch wiederum mindestens einen radialen Durchbruch 14a auf, um die bestimmungsgemäße Anlage eines festzulegenden Kunststoffrohres gegenüber dem Anschlußteil 1 kontrollieren zu können.

## Patentansprüche

1. Abdichtende Verbindung eines Kunststoffrohres (10) mit einem aus Metall gefertigten Anschlußstück (1), wobei das im Verbindungsbereich liegende Ende des Kunststoffrohres mittels einer Preßhülse (3) auf einen zylindrischen Abschnitt des Anschlußstückes aufgepreßt ist und die Preßhülse mittels eines Halteringes (4, 4a) in axialer Richtung am Anschlußstück unverlierbar festgelegt ist, **dadurch gekennzeichnet, daß** der Haltering (4, 4a) ein separates Bauteil gegenüber der Preßhülse (3) bildet, die Preßhülse (3) an der dem Haltering (4, 4a) zugewandten Seite mit einem aufgeweiteten Ringabschnitt (7) versehen ist, der in eine hinterschnittene Nut des Halteringes (4, 4a) eingeschnäppt ist und der Haltering mit mindestens einem radial verlaufenden, im Bereich des Endes des Kunststoffrohres (10) vorgesehenen Durchbruch (14, 14a) ausgerüstet ist.

2. Verbindung nach Anspruch 1, dadurch gekennzeichnet, daß der Haltering (4) unmittelbar auf das Anschlußstück (1) aufgeschnäppt ist.

3. Verbindung nach Anspruch 1, dadurch gekennzeichnet, daß der Haltering (4a) auf eine das Anschlußstück (1) übergreifende Überwurfmutter (15) aufgeschnäppt ist.

4. Verbindung nach Anspruch 1, dadurch gekennzeichnet, daß die Preßhülse (3) axial über das im Verbindungsbereich liegende Ende (8) der Anschlußstückes (1) hinaus vorsteht.

5. Verbindung nach einem der vorhergehenden Ansprüche, dadurch gekennzeichnet, daß die Preßhülse (3) an beiden Stirnseiten mit einem aufgeweiteten Ringabschnitt (7) versehen ist.

## Claims

1. A sealing connection of a plastics tube (10) to a connecting portion (1) made from metal, wherein the end of the plastics tube which is disposed in the connecting region is pressed by means a pressing sleeve (3) onto a cylindrical part of the connecting portion and the pressing sleeve is fixed non-losably in the axial direction to the connecting portion by means of a holding ring (4, 4a), characterised in that the holding ring (4, 4a) forms a separate component with respect to the pressing sleeve (3), the pressing sleeve (3) is provided at the side towards the holding ring (4, 4a) with an enlarged ring part (7) which is snapped into a groove of undercut configuration in the holding ring (4, 4a) and the holding ring is provided with at least one radially extending opening (14, 14a) provided in the region of the end of the plastics tube (10).

2. A connection according to claim 1 characterised in that the holding ring (4) is snapped directly onto the connecting portion (1).

3. A connection according to claim 1 characterised in that the holding ring (4a) is snapped onto a union nut (15) which engages over the connecting portion (1).

4. A connection according to claim 1 characterised in that the pressing sleeve (3) projects axially beyond the end (8) of the connecting portion (1), which is in the connecting region.

5. A connection according to one of the preceding claims characterised in that the pressing sleeve (3) is provided at both ends with an enlarged ring part (7).

## Revendications

1. Connexion étanche d'un tuyau en matière synthétique (10) avec un raccord (1) métallique, l'extrémité du tuyau en matière synthétique, située dans la zone de connexion, étant sertie, par l'intermédiaire d'une bague de sertissage (3), sur un tronçon cylindrique du raccord et la bague de sertissage étant fixée de façon imperdable, dans la direction axiale, sur le raccord, au moyen d'une bague de retenue (4, 4a), **caractérisée en ce que** la bague de retenue (4, 4a) constitue un composant distinct de la bague de sertissage (3), en ce que la bague de sertissage (3), du côté orienté vers la bague de retenue (4, 4a), est pourvue d'un tronçon annulaire (7) élargi, qui est pris dans une rainure, taillée en contre-dépouille, de la bague de retenue (4, 4a) et en ce que la bague de retenue est équipée d'au moins un perçage (14, 14a), s'étendant radialement, prévu dans la zone de l'extrémité du tuyau en matière synthétique (10).

2. Connexion selon la revendication 1, caractérisée en ce que la bague de retenue (4) est en prise directement sur le raccord (1).

3. Connexion selon la revendication 1, caractérisée en ce que la bague de retenue (4a) est en prise sur un écrou-raccord (15) coiffant le raccord (1).

4. Connexion selon la revendication 1, caractérisée en ce que la bague de sertissage (3) dépasse axialement vers l'avant, au-delà de l'extrémité (8) du raccord (1) qui est située dans la zone de connexion.

5. Connexion selon l'une des revendications précédentes, caractérisée en ce que la bague de sertissage (3), sur les deux faces frontales, est pourvue d'un tronçon annulaire (7) élargi.
